# EUROPEAN PATENT APPLICATION

(11) **EP 3 251 493 A1**
(43) Date of publication of application: **06.12.2017**
(21) Application number: 17173714.1
(22) Date of filing: 31.05.2017
(51) Int. Cl.: A01G 9/08

(54) **A METHOD AND DEVICE FOR PRODUCING A STABILIZED GROWING MEDIUM FOR CULTIVATION OF A PLANT OR SEEDLING**

(30) Priority: 31.05.2016 NL 2016863
(71) Applicant: Max Roots B.V., 2681 TW Monster (NL)
(72) Inventor: Dijkstra, Gerrit, 2681 TW Monster (NL)
(74) Representative: V.O.

(57) **Abstract**

A method and device (1) for producing a stabilized growing medium for cultivation of a plant (3) or seedling. The method comprises the steps of providing a receiving unit (11) for containing the rooting plug to be formed and placing a root structure (5) of a plant (3) or seedling in the receiving unit (11). Further, the method includes the steps of filling the receiving unit (11) with slurry material forming a stabilized growing medium and curing the slurry material in the receiving unit (11) while holding the root structure (5) of the plant (3) or seedling in the receiving unit (11).

## Description

The invention relates to a method for producing a stabilized growing medium for cultivation of a plant or seedling.

Stabilized growing media are widely known for propagating plants and seedlings, such as orchids and anthuriums. For the purpose of propagating young plants or seedlings, relatively small rooting plugs are applied, while, on the other hand, for the purpose of growing the propagated plants or seedlings, relatively large substrates are applied.

Due to the ease of handling use, rooting plugs enjoy a rapidly growing interest of growers. However, in view of the high number of plants that are cultivated, transport and storage costs may increase as well, especially in case of relatively large stabilized growing media.

It is an object of the invention to provide a method for producing a stabilized growing medium that alleviates transport and storage costs. Thereto, according to an aspect of the invention, the method comprises the steps of providing a receiving unit for containing the rooting plug to be formed, placing a root structure of a plant or seedling in the receiving unit, filling the receiving unit with slurry material forming a stabilized growing medium, and curing the slurry material in the receiving unit while holding the root structure of the plant or seedling in the receiving unit.

By filling a receiving unit with slurry material forming a stabilized growing medium while holding the root structure of the plant or seedling in the receiving unit, a rooting plug can be locally produced around the rooting structure of the plant or seedling so that the need to transport produced stabilized growing media to a breeder's location and store said stabilized growing media locally is reduced. Further, the number of operations per plant is reduced as the production step and step of transferring the plant into the stabilized growing media are integrated.

Advantageously, the root structure of the plant or seedling to be held in the receiving unit is contained in a substrate such as a rooting plug wherein the plant or seedling has been propagated. Then, a smaller sized rooting plug may be integrated in a locally produced stabilized growing medium, e.g. when the plant or seedling has reached a propagating phase wherein the rooting structure has fully penetrated the rooting plug or other substrate.

The invention also relates to a device for producing a stabilized growing medium for cultivation of a plant or seedling.

Advantageous embodiments according to the invention are described in the appended claims.

It should be noted, that the method steps and technical features described above may each on its own be embodied in a method or device for producing a stabilized growing medium, i.e. isolated from the context in which it is described, separate from other steps or features, or in combination with only a number of the other steps or features described in the context in which it is disclosed. Each of these steps or features may further be combined with any other step or feature disclosed, in any combination.

By way of non-limiting example only, embodiments of the present inventions will now be described with reference to the accompanying drawing in which:
Fig. 1 shows a schematic view of a device according to the invention for producing a stabilized growing medium for cultivation of a plant or seedling, and
Fig. 2 shows a flow chart of a method according to the invention.

The embodiment disclosed herein is shown as an example only and should by no means be understood as limiting the scope of the claimed invention in any way. In this description and in the figures, the same or similar elements have the same or similar reference signs.

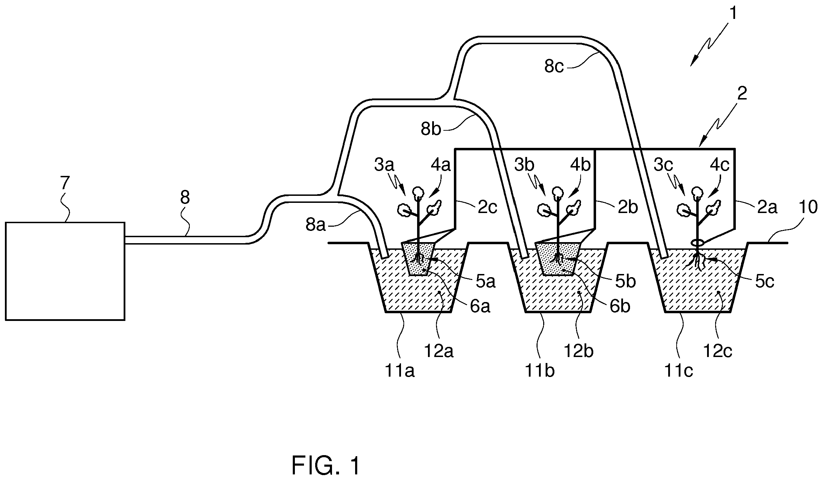

Figure 1 shows a schematic view of a device 1 according to the invention for producing a stabilized growing medium for cultivation of a plant, seedling or tissue culture. The device 1 comprises a gripping system 2 and a system providing a slurry material that forms a stabilized growing medium.

The gripping system 2 of the device 1 is arranged for gripping a plant or seedling and placing and holding a root structure of a plant or seedling in a receiving unit. In the shown embodiment, the gripping system 2 includes a multiple number of gripping elements 2a-c so that the gripping system 2 is arranged for simultaneously holding the root structure of a multiple number of plants or seedlings in corresponding receiving units.

In Fig. 1, the gripping elements 2a-c each grip a plant 3a-c provided with a leave structure 4a-c and a root structure 5a-c. The plants 3a-c are placed in respective receiving units 11a-c that are implemented as cells in a tray 10. The plant 3b located in the center and the plant 3a on the left have a root structure 5a-b that is contained in a substrate 6a-b, the substrate being a rooting plug wherein the plant 3a-b has been propagated. The rooting plugs 6a-b can be implemented as a partly open plug described in patent publication EP 2 572 571 in the name of the applicant or as another plug type such as a massive rooting plug. The plant 3c on the right has a bare root structure, e.g. removed from a substrate where it has been propagated.

The above-mentioned system providing a slurry material forming a stabilized growing medium includes a source 7 of slurry material forming a stabilized growing medium, and a multiple number of delivery lines 8a-c for filling the respective receiving units 11a-c simultaneously with the slurry material while holding the root structures 5a-c of the plants 3a-c in the receiving unit 11a-c. In the shown embodiment, the system 7 includes a central delivery line 8 interconnecting the delivery lines 8a-c to the source 7 for feeding said delivery lines 8a-c. However, the individual delivery lines 8a-c may also extend directly from the source 7. Further, a single delivery line may be applied, e.g. provided with delivery apertures near the individual receiving units 11a-c. Also, multiple delivery lines can be arranged for filling a single receiving unit thereby accelerating a filling process of the receiving units and/or improving a process of homogeneously filling the receiving units.

During use of the device 1, the gripping system 2a-c is used for gripping the plants 3a-c such that the root structures 5a-c are placed in the corresponding receiving unit 11a-c. Then, the system providing a slurry material for forming a stabilized growing medium is activated for filling the respective receiving units11a-c and the slurry material in the receiving units 11a-c is cured. During the steps of filling the receiving unit with a slurry material and curing the slurry material in the receiving unit 11a-c, the root structure 5a-c of the plants 3a-c are held in the receiving unit 11a-c by means of the gripping system 2a-c.

Using the device 1, stabilized growing media 12a-c are formed in the receiving units 11a-c surrounding the root structures 5a-c of the plants. The exterior geometry and dimensions of the stabilized growing media 12a-c correspond to the interior geometry and dimensions of the receiving unit walls. Further, the stabilized growing media12a-c may include a receiving cavity receiving the rooting structures 5a-c of the plants 3a-c or any structure containing said rooting structures 5a-c such as the substrate 6a-b containing the root structures 5a-b of the plants 3a-b in the middle and on the left. Here, side walls of the receiving cavity may be contiguous with the exterior structure of the substrate 6a-b. Advantageously, the produced stabilized growing media 12a-c may be integrated with the substrate 6, also called rooting plugs 6a-b so that single integrated stabilized growing media are formed around the rooting structure 5 of the plants 3.

During operation of the device 1 a single or a multiple number of stabilized growing media is formed by filling the receiving unit with slurry material and curing said slurry material. A stabilized growing medium may be formed as a rooting plug for accommodating a rooting structure of a plant.

The rooting plug is preferably made from organic and/or non-organic material for cultivation of plants. Advantageously, the plug body can be formed as an integral part. Further, the rooting plug may be formed as a composition that is spongy and/or penetrable to growing roots. Such and other suitable substrate materials and/or compositions are known in the art. For example, the rooting plug may comprise organic fibres, e.g. coconut fibre, peat and/or bark. Here, the plug comprises for instance a substrate composition including particles joined by a bind agent, such as a non-toxic and/or organic glue. The joined particles may e.g. comprise organic fibres and/or soil particles. Preferably, at least a part of the rooting plug is resilient.

The receiving units 11a-c may have a generally cylindrically shaped geometry, preferably having a circular cross section. Further, the receiving units may be tapered to their bottom. However, the containers may have another geometry such as a cylinder with straight walls and a polygonal cross section, such as a square section.

The rooting plugs 6a-b already containing the rooting structures 5a-b of the plants generally have a relatively small size for facilitating a process of propagating young plants. Typically, said small sized rooting plugs have a diameter of 3 cm or less, or a diameter of circa 4.5 cm or a diameter of up to circa 6 cm.

The rooting plugs 12a-c that are produced using the device 1 described above are generally larger sized for facilitating a process of cultivating the raised young plants. Typically, the large sized rooting plugs have a diameter that is circa 6 cm or more, such as circa 7 cm, circa 9 cm or circa 12 cm or more.

Preferably, the root structures 5a-c are placed in the receiving units 11a-c at a level just below the top surface of the slurry material entering the receiving units. However, preferably, the leave structure 4a-c of the plants 3a-c are located above the receiving unit so that the leaves and/or stem are not submerged in the slurry material forming a stabilized growing medium.

The receiving units 11a-c can be filled to a pre-determined level, e.g. up to circa 50%, circa 60%, circa 70% or more such as 80%, 90% or 100% of the content of the receiving units.

In the shown embodiment, the tray 10 is an integrally formed structure provided with a multiple number of receiving units 11, also called cells, that are arranged in a one-dimensional or two-dimensional array. However, the device 1 can also be applied for producing stabilized growing media in receiving units 11 that are separate, such as pots.

As described above, multiple stabilized growing media can be produced simultaneously. However, another device is arranged for producing a single stabilized growing medium at a time. Then, the device can be provided with a single gripping element and a single delivery line for filling a single receiving unit at a time. The receiving unit can be a cell of a tray, another cell or a pot.

Advantageously, the device 1 may include a supporting structure for supporting the single or multiple number of receiving units and/or a conveyor for conveying a multiple number of receiving unit towards and from the delivery lines.

Additionally, the device 1 can be provided with a control device controlling the gripping system and the system providing slurry material for forming a stabilized growing medium. The gripping system may include actuators for performing controlled gripping movements. Further, the system providing slurry material for forming a stabilized growing medium may include a valve actuator or valve actuators for feeding the slurry material in a controlled manner.

The source 7 of slurry material for forming a stabilized growing medium may contain a first container for containing a binder material and a second container for containing a dry material. Slurry material can be formed by mixing the binder material and the dry material for delivering a mixed slurry material forming a stabilized growing medium.

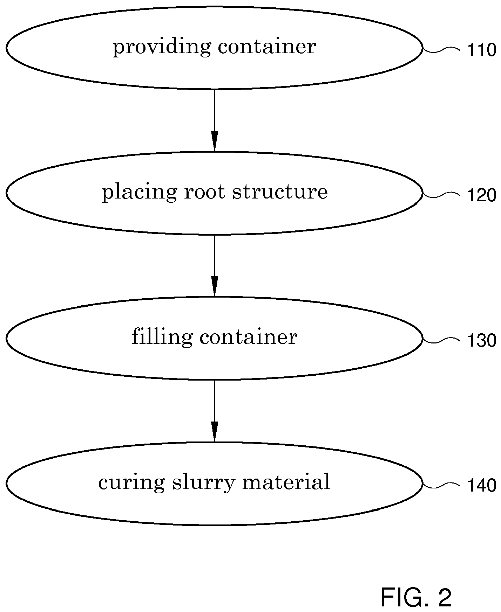

Figure 2 shows a flow chart of a method according to the invention. The method is used for producing a stabilized growing medium for cultivation of a plant or seedling. The method comprises the steps of providing 110 a receiving unit 11 for containing the stabilized growing medium to be formed, placing 120 a root structure 5 of a plant 3 or seedling in the receiving unit 11, filling 130 the receiving unit 11 with a slurry material forming a stabilized growing medium, and curing 140 the slurry material in the container 11 while holding the root structure 5 of the plant 3 or seedling in the receiving unit 11.

The produced stabilized growing media may be arranged for accommodating and/or cultivating a single or a multiple number of seedlings and/or plants.

The invention is not restricted to the embodiments described above. It will be understood that many variants are possible.

In a first embodiment described above, cells of a tray are filled with slurry material forming stabilized growing media in said cells. Then, advantageously, a multiple number of stabilized growing media can be formed, e.g. as rooting plugs. In a second embodiment described above, a pot is filled with said slurry material, the root structure of the plant or seedling being propagated in a substrate such as a rooting plug. In a third embodiment described above, again a pot is filled with said slurry material. Here, the root structure of the plant or seedling is bare, e.g. removed from a rooting plug or from another synthetic or natural substrate.

These and other variants will be apparent to the person skilled in the art and are considered to fall within the scope of the invention as formulated by the following claims. For the purpose of clarity and a concise description features are described herein as part of the same or separate embodiments. However, it will be appreciated that the scope of the invention may include embodiments having combinations of all or some of the features described.

## Claims

1. A method for producing a stabilized growing medium for cultivation of a plant or seedling, comprising the steps of:
- providing a receiving unit for receiving the stabilized growing medium to be formed;
- placing a root structure of a plant or seedling in the receiving unit;
- filling the receiving unit with slurry material forming a stabilized growing medium, and
- curing the slurry material in the receiving unit while holding the root structure of the plant or seedling in the receiving unit.

2. A method according to claim 1, wherein the receiving unit is a cell of a tray or a pot.

3. A method according to claim 1 or 2, where a leave structure of the plant or seedling is located above the receiving unit.

4. A method according to any of the preceding claims, wherein the root structure of the plant or seedling is contained in a substrate.

5. A method according to claim 4, wherein the substrate is a rooting plug wherein the plant or seedling has been propagated.

6. A method according to any of the preceding claims, wherein slurry material is formed by mixing binder material and dry material.

7. A method according to any of the preceding claims, wherein the stabilized growing medium is a rooting plug.

8. A method according to any of the preceding claims, wherein the slurry material flows into the receiving unit via a single or a multiple delivery lines.

9. A method according to any of the preceding claims, wherein a multiple number of stabilized growing media are produced simultaneously.

10. A device for producing a stabilized growing medium for cultivation of a plant or seedling, comprising:
- a gripping system for gripping a plant or seedling and placing and holding a root structure of the plant or seedling in a receiving unit;
- a system providing slurry material forming a stabilized growing medium, the system including a single or a multiple number of delivery lines for filling the container with the slurry material, while holding the root structure of the plant or seedling in the receiving unit.

11. A device according to claim 10, wherein the multiple number of delivery lines are arranged for simultaneously filling a multiple number of receiving units.

12. A device according to claim 10 or 11, wherein the gripping system is arranged for simultaneously holding the root structure of a multiple number of plants or seedlings.

13. A device according to any of the preceding claims 10-12, further comprising a supporting structure for supporting the single or multiple number of receiving units.

14. A device according to any of the preceding claims 10-13, further comprising a conveyor for conveying a multiple number of receiving units towards and from the delivery lines.
